# EUROPEAN PATENT SPECIFICATION

(11) **EP 3 069 053 B1**
(45) Date of publication and mention of the grant of the patent: **27.12.2017**
(21) Application number: 14808706.7
(22) Date of filing: 10.11.2014
(51) Int. Cl.: F16H 61/04, F16H 61/682, F16H 63/50

(54) **CONTROL SYSTEM OF VEHICLE**
STEUERUNGSSYSTEM FÜR EIN FAHRZEUG
SYSTÈME DE COMMANDE DE VÉHICULE

(30) Priority: 14.11.2013 JP 2013236347
(43) Date of publication of application: 21.09.2016
(73) Proprietor: TOYOTA JIDOSHA KABUSHIKI KAISHA, Toyota-shi, Aichi-ken 471-8571 (JP)
(72) Inventor: KOBAYASHI, Katsuya, Toyota-shi Aichi-ken 471-8571 (JP)
(74) Representative: D Young & Co LLP
(86) International application number: PCT/IB2014/002479
(87) International publication number: WO 2015/071747

(56) References cited:
- EP-A2- 2 138 741
- DE-C1- 4 422 554
- FR-A1- 2 907 746
- JP-A- 2001 074 135
- US-A- 5 569 115

## Description

### BACKGROUND OF THE INVENTION

### 1. Field of the Invention

The present invention relates to a control system of a vehicle with a manual transmission (MT), and particularly to an improvement for suppressing incongruity that a driver feels at shifting.

### 2. Description of Related Art

In a vehicle with an engine, a manual transmission and a clutch provided between the engine and the manual transmission (a manual transmission vehicle), it is known a technique of performing a rotation synchronization control of the engine upon disengagement of the clutch accompanying switching of gears of the manual transmission. For example, a shift control unit for the manual transmission vehicle, which is described in Japanese Patent Application Publication No. 2001-074135 (JP 2001-074135), is an example. In this technique, an input rotation speed sensor for detecting an input rotation speed of an manual transmission is provided, which controls a rotation speed of the engine based on the detection result detected by the input rotation speed sensor to synchronize it with the input rotation speed of the manual transmission, whereby enable to suppress the occurrence of the shift shock. A control system having all the features of the preamble of claim 1 is known from EP 2 138 741 A2.

### SUMMARY OF THE INVENTION

In JP 2001-074135, when the manual transmission is shifted (when gear positions are switched), if a shift direction is determined based on the change in the input rotation speed of the manual transmission, a torsion of a drive system is sometimes released by disengagement of a clutch and the input rotation speed of the manual transmission is rapidly changed, and therefore there is a possibility that the engine rotation synchronization control is determined to be performed to the down-shift side as the input rotation speed is changed to the increase side even though the current gear position is the lowest gear (for example, the first gear). In addition, there is a possibility that the engine rotation synchronization control is determined to be performed to the up-shift side as the input rotation speed is changed to the decrease side even though the current gear position is the highest gear (for example, the sixth gear in a 6 forward gears MT). Thus, there is a possibility that the engine rotation speed is changed in the direction opposite to the shift direction intended by the driver due to the engine rotation synchronization control and therefore the driver feels incongruity. Such a problem is one that is newly found in the course of the present inventors continuing extensive studies with the intention of improving driving performance at shifting.

The present invention provides a control system of a vehicle for suppressing incongruity that a driver feels at shifting.

Aspect of the invention relates to a control system of a vehicle. The control system includes an engine, a manual transmission, a clutch and an electronic control unit. The clutch is provided in a power transmission path between the engine and the manual transmission. When the manual transmission is shifted and when an input rotation speed of the manual transmission is changed to an increase side, the electronic control unit determines a down-shift is executed. When the manual transmission is shifted and when the input rotation speed of the manual transmission is changed to a decrease side, the electronic control unit determines an up-shift is executed. The electronic control unit is configured to execute a rotation synchronization control of the engine when the electronic control unit determines that the down-shift or the up-shift is executed. The electronic control unit is configured to suppress an execution of the rotation synchronization control when the manual transmission is shifted from the lowest gear and the input rotation speed of the manual transmission increases or when the manual transmission is shifted from the highest gear and the input rotation speed of the manual transmission decreases.

In this way, since in the case where the input rotation speed of the manual transmission increases when the manual transmission is shifted from the lowest gear or the input rotation speed of the manual transmission decreases when the manual transmission is shifted from the highest gear, the execution of the engine rotation synchronization control is suppressed, the execution of the engine rotation synchronization control for changing the engine rotation speed in the direction opposite to the shift direction intended by the driver can be suitably suppressed. That is, it can be provided a control unit of a vehicle for suppressing incongruity that a driver feels at shifting.

In the above control system, the electronic control unit may be configured to perform the rotation synchronization control to increase the rotation speed of the engine when a change rate of a ratio of the input rotation speed of the manual transmission to a vehicle speed in the lowest gear is greater than or equal to a first prescribed threshold value. The electronic control unit may be configured to perform the rotation synchronization control to increase the rotation speed of the engine when a change rate of the ratio of the input rotation speed of the manual transmission to the vehicle speed in the other gear positions than the lowest gear is greater than or equal to a second prescribed threshold value. The first prescribed threshold value may be higher than the second prescribed threshold value.

In the above control system, the electronic control unit may be configured to prohibit the rotation synchronization control that increases the rotation speed of the engine when a current gear position is the lowest gear and the clutch is disengaged.

In the above control system, the electronic control unit may be configured to perform the rotation synchronization control that decreases the rotation speed of the engine when a change rate of a ratio of the input rotation speed of the manual transmission to a vehicle speed in the highest gear is less than or equal to a third prescribed threshold value. The electronic control unit may be configured to perform the rotation synchronization control that decreases the rotation speed of the engine when a change rate of the ratio of the input rotation speed of the manual transmission to the vehicle speed in the other gear positions than the highest gear is less than or equal to a forth prescribed threshold value. The third prescribed threshold value may be less than the forth prescribed threshold value.

In the above control system, the electronic control unit may be configured to prohibit the rotation synchronization control that decreases the rotation speed of the engine when a current gear position is the highest gear and the clutch is disengaged.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically showing a part of a drive unit and a control system thereof of a vehicle to which the present invention is suitably applied;
FIG.2 is a functional block diagram illustrating a principal part of the control function provided in a control unit of the vehicle shown in FIG.1;
FIG.3 is a timing chart showing an example of an engine rotation synchronization control at shifting of a manual transmission of the vehicle shown in FIG.1; and
FIG.4 is a flow chart illustrating a principal part of an example of the engine rotation synchronization control achieved by the control unit of the vehicle shown in FIG. 1.8.

### DETAILED DESCRIPTION OF EMBODIMENTS

In the present invention, preferably when the manual transmission is shifted, a down-shift is determined when a change rate of a ratio of an input rotation speed of the manual transmission to a vehicle speed is greater than or equal to a prescribed threshold value, and an up-shift is determined when the change rate of the ratio of the input rotation speed of the manual transmission to the vehicle speed is less than or equal to a prescribed threshold value. The individual threshold values are respectively set in dependence on predefined ratios of the input rotation speed of the manual transmission to the vehicle speed.

In the present invention, preferably, in response to the ratio of the input rotation speed of the manual transmission to the vehicle speed which corresponds to the lowest gear in the manual transmission, the threshold value determined for determining the down-shift is set to a value that is great enough to suppress a determination of the down-shift.

In the present invention, preferably, in response to the ratio of the input rotation speed of the manual transmission to the vehicle speed which corresponds to the highest gear in the manual transmission, the threshold value determined for determining the up-shift is set to a value that is small enough to suppress a determination of the up-shift.

The present invention is suitably applied to a control unit of a vehicle which determines the shifting (switching of gear positions) of a manual transmission based on a change in an input rotation speed of the manual transmission, without a shifting stroke sensor or the like for detecting a shifting operation position of a shift lever for switching gear positions of the manual transmission.

Hereinafter, preferred embodiments of the present invention will be described in detail with reference to the accompanying drawings.

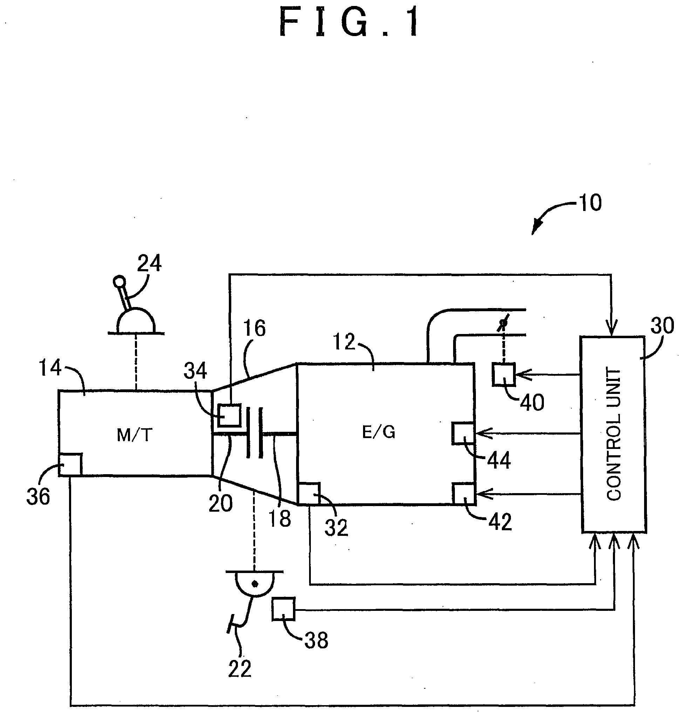

FIG.1 is a diagram schematically showing a part of a drive unit and a control system thereof of a vehicle 10 to which the present invention is suitably applied. As shown in FIG.1, the vehicle 10 is provided with an engine 12 and a manual transmission 14. A clutch 16 is provided in a power transmission system path between the engine 12 and the manual transmission 14. That is, the clutch 16 is provided such that the power transmission path between a clutch shaft 18 of the engine 12 and an input shaft 20 of the manual transmission 14 can be connected or disconnected. In the vehicle 10, a driving force generated by the engine 12 is transmitted to the manual transmission 14 via the clutch 16. Moreover, the driving force after being shifted by the manual transmission 14 is transmitted to left and right drive wheels via a differential gear which is not shown.

The engine 12 which is a driving force source for generating a running driving force for the vehicle 10, for example, is an internal combustion engine such as a diesel engine or a gasoline engine that generates a driving force by combustion of fuel injected into a cylinder. The clutch 16 is normally in an engagement state so as to connect the power transmission path between the engine 12 and the manual transmission 14, and on the other hand, in a slip state or a disengagement state by depression operation on a clutch pedal 22 to disconnect (cut off) the power transmission path between the engine 12 and the manual transmission 14. That is, it is a power connecting/disconnecting unit for connecting/disconnecting the delivery of power output from the engine 12 to the manual transmission 14.

The manual transmission 14 is a mechanical stepped transmission mechanism (a manual shifting transmission) which selectively establishes a plurality of gear positions by a manual operation of the driver to a shift lever 24 such that the rotation inputted from the engine 12 is decelerated or accelerated in a prescribed gear ratio γ and is output. In the manual transmission 14, for example, a certain gear position is selectively established out of forward gears of six steps from the first ("1st") gear to the sixth ("6th") gear, a reverse gear, and a neutral gear, and speed conversions corresponding to respective gear ratios γ are performed. That is, the vehicle 10 is a manual shifting transmission vehicle (MT vehicle) provided with the manual transmission 14 for selectively establishing a plurality of gear positions by the manual operation of the driver to the shift lever 24.

The vehicle 10 is provided with a control unit 30 for performing various controls related to the vehicle 10. For example, the control unit 30 is a so-called microcomputer including a CPU, a RAM, a ROM, an input interface, etc., and configured to perform various controls represented by an output control of the engine 12 by the CPU performing a signal process according to a program stored in the ROM in advance while utilizing a temporary storage function of the RAM. Preferably, the control unit 30 is an engine control unit for controlling the driving (output) of the engine 12 (Eng-ECU).

In the vehicle 10, it is configured as shown in FIG.1 such that signals indicating the detection values of various switches or sensors are supplied from these switches or sensors to the control unit 30. That is, a signal of the rotation speed Ne of the engine 12 indicating the rotation speed of the clutch shaft 18 is supplied from an engine rotation speed sensor 32 to the control unit 30, a signal of the input rotation speed Ni of the manual transmission 14 indicating the rotation speed of the input shaft 20 is supplied from an input rotation speed sensor 34 to the control unit 30, a signal indicating the vehicle speed V corresponding to the output rotation speed Nout of the manual transmission 14 is supplied from a vehicle speed sensor 36 to the control unit 30, and a signal indicating whether there is a depression operation by the driver to the clutch pedal 22 or indicating the operation amount (depression amount) is supplied from a clutch stroke sensor 38 to the control unit 30, respectively.

It is configured to output from the control unit 30 signals for controlling operations of various devices provided in the vehicle 10. That is, the signals may serve as engine output control command signals for the output control of the engine 12, for example, a signal for driving a throttle actuator 40 which is used to control the opening and closing of the electronic throttle valve in accordance with the accelerator opening Acc, an injection signal for controlling the amount of fuel injected from the fuel injection device 42, an ignition timing signal for controlling the ignition timing of the engine 12 by an ignition device 44, and the like.

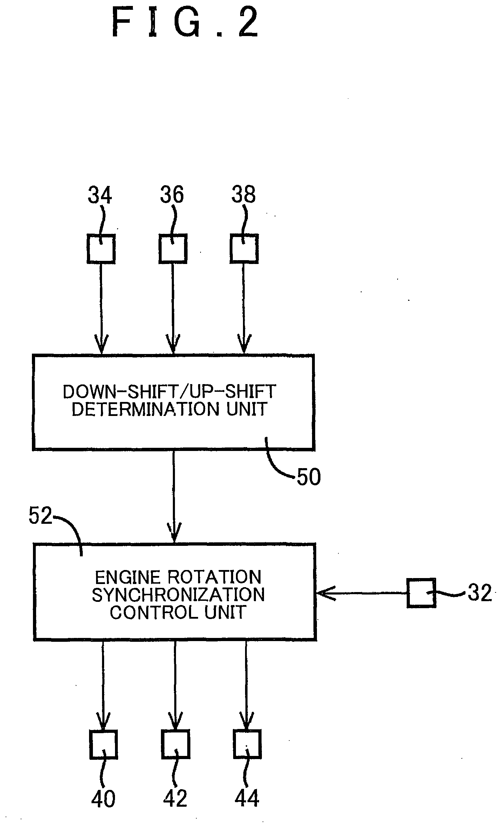

FIG.2 is a functional block diagram illustrating a principal part of the control function provided in the control unit 30. A down-shift/up-shift determination unit 50 shown in FIG.2 determines that an up-shift or a down-shift is executed in the manual transmission 14 based on the input rotation speed Ni of the manual transmission 14. The down-shift of the manual transmission 14 is determined based on a change in the input rotation speed Ni to the increase side, and the up-shift of the manual transmission 14 is determined based on a change in the input rotation speed Ni to the decrease side. Preferably, The down-shift/up-shift determination unit 50 determines that the up-shift or the down-shift is executed in the manual transmission 14 based on a change amount or a change rate (a time change rate) of a ratio of the input rotation speed Ni of the manual transmission 14 to the vehicle speed V, i.e., NiV ratio(= Ni/V). The down-shift of the manual transmission 14 is determined based on a change in the NiV ratio to the increase side, the up-shift of the manual transmission 14 is based on a change in the NiV ratio to the decrease side. Preferably, when a disengagement of the clutch 16 (a depression operation to the clutch pedal 22) is detected by the clutch stroke sensor 38, the down-shift/up-shift determination unit 50 determines that the up-shift or the down-shift is executed in the manual transmission 14 based on the change rate of the NiV ratio or the like.

Preferably, if the change rate of the NiV ratio is greater than or equal to a down-shift determination value which is a prescribed threshold value, the down-shift/up-shift determination unit 50 determines that the down-shift of the manual transmission 14 is executed. For example, if the NiV ratio is Ndn times or more of a reference value (for example, Ni during the engagement of the clutch 16 (= Ne)), the down-shift of the manual transmission 14 is determined. Preferably, if the change rate of the NiV ratio is less than or equal to an up-shift determination value which is a prescribed threshold value, the down-shift/up-shift determination unit 50 determines that the up-shift of the manual transmission 14. For example, if the NiV ratio is Nup times or less of the reference value, the up-shift of the manual transmission 14 is determined. The NiV ratio is determined according to the gear position (gear ratio) established by the manual transmission 14. That is, the gear positions established in the manual transmission 14 correspond to the prescribed NiV ratios, respectively. Preferably, the individual down-shift determination values Ndn and up-shift determination values Nup are respectively set according to the NiV ratios each of which corresponds to each gear position of the manual transmission 14, and stored in a storage unit provided in the control unit 30 or the like. Preferably, the relationships between the NiV ratios corresponding to respective gear positions of the manual transmission 14 and the Ndns, Nups corresponding to respective ratios NiV are stored in a form of mapping or the like.

Upon disengagement of the clutch 16 at the time of switching the gear positions (the gear stages) of the manual transmission 14, an engine rotation synchronization control unit 52 performs an engine rotation synchronization control for synchronizing the rotation speed Ne of the engine 12 with the input rotation speed Ni of the manual transmission 14. Specifically, in order to make the rotation speed Ne of the engine 12 substantially equal to the input rotation speed Ni of the manual transmission 14 after shifting, the output of the engine 12 is controlled by means of the opening and closing control of the electronic throttle valve by the throttle actuator 40, the control of the fuel injection amount by the fuel injection device 42, the control of the ignition timing by the ignition device 44, and the like.

If it is determined that the down-shift or the up-shift of the manual transmission 14 are executed through the down-shift/up-shift determination unit 50, the engine rotation synchronization control unit 52 performs the engine rotation synchronization control for synchronizing the rotation speed Ne of the engine 12 with the input rotation speed Ni of the manual transmission 14. For example, if the input rotation speed Ni of the manual transmission 14 has been changed by a prescribed ratio or more with respect to a reference value or when the NiV ratio has been changed by a prescribed ratio or more with respect to a reference value, shifting (switching of gears) of the manual transmission 14 is determined, and the engine rotation synchronization control is started up according to such determination. In other words, using that the input rotation speed Ni has been changed by a prescribed ratio or more with respect to a reference value or that the NiV ratio has been changed by a prescribed ratio or more with respect to a reference value as a condition (trigger), the engine rotation synchronization control is started up. Alternatively, using that the input rotation speed Ni has been changed by a prescribed amount or more with respect to a reference value or that the NiV ratio has been changed by a prescribed amount or more with respect to a reference value as a condition, the engine rotation synchronization control may also be started up.

In the engine rotation synchronization control, for example, the engine rotation synchronization control unit 52 performs a feedback-control on the rotation speed Ne of the engine 12 such that the absolute value of the difference between the rotation speed Ne of the engine 12 and the input rotation speed Ni of the manual transmission 14 (= |Ne - Ni|) is as small as possible. By such a control, upon down-shift of the manual transmission 14, the rotation speed Ne of the engine 12 increases. Upon up-shift of the manual transmission 14, the rotation speed Ne of the engine 12 decreases. If a prescribed rotation synchronization condition is satisfied, the engine rotation synchronization control unit 52 ends the engine rotation synchronization control. Specifically, if the difference between the rotation speed Ne of the engine 12 and the input rotation speed Ni of the manual transmission 14 has become less than a prescribed value which is determined in advance, the engine rotation synchronization control is ended. Preferably, if the absolute value of the difference between the rotation speed Ne of the engine 12 and the input rotation speed Ni of the manual transmission 14 (= |Ne - Ni|) has become less than a prescribed value for a period of time, the engine rotation synchronization control is ended.

When the manual transmission 14 is shifted from the lowest gear, i.e., from the gear position in which the gear ratio γ is maximum (for example, the first gear), if the input rotation speed Ni of the manual transmission 14 increases, the engine rotation synchronization control unit 52 suppresses the execution of the engine rotation synchronization control. In other words, if the current gear position in the manual transmission 14 is the lowest gear and the input rotation speed Ni of the manual transmission 14 increases, the execution of the engine rotation synchronization control is suppressed. Preferably, by suppressing the determination of the down-shift based on the NiV ratio, the execution of the engine rotation synchronization control is suppressed. For example, in response to the NiV ratio corresponding to the lowest gear in the manual transmission 14, the down-shift determination value Ndn which is determined to be the threshold value for determining the down-shift is set to a value which is great enough (which is much greater than those down-shift determination values corresponding to the other gear positions) to suppress (actually prohibit) the determination of the down-shift.

When the manual transmission 14 is shifted from the highest gear, i.e., from the gear position in which the gear ratio γ is minimum (for example, the sixth gear), if the input rotation speed Ni of the manual transmission 14 decreases, the engine rotation synchronization control unit 52 suppresses the execution of the engine rotation synchronization control. In other words, if the current gear position in the manual transmission 14 is the highest gear and the input rotation speed Ni of the manual transmission 14 decreases, the execution of the engine rotation synchronization control is suppressed. Preferably, by suppressing the determination of the up-shift based on the NiV ratio, the execution of the engine rotation synchronization control is suppressed. For example, in response to the NiV ratio corresponding to the highest gear in the manual transmission 14, the up-shift determination value Nup which is determined to be the threshold value for determining the up-shift is set to a value which is small enough (which is much less than those up-shift determination values corresponding to the other gear positions) to suppress (actually prohibit) the determination of the up-shift.

Preferably, the engine rotation synchronization control unit 52 may determine (calculates) whether the current gear position of the manual transmission 14 is the highest gear or the lowest gear on the basis of the NiV ratio, and based on the determination result, suppress the execution of the engine rotation synchronization control in the case where the input rotation speed Ni increases at the time of shifting from the lowest gear in the manual transmission 14 or the input rotation speed Ni decreases at the time of shifting from the highest gear in the manual transmission 14. That is, when the current gear position of the manual transmission 14 is determined to be the lowest gear based on the NiV ratio, if the input rotation speed Ni increases, the execution of the engine rotation synchronization control is suppressed. Preferably, the execution of the engine rotation synchronization control is prohibited (not performed). When the current gear position of the manual transmission 14 is determined to be the highest gear based on the NiV ratio, if the input rotation speed Ni decreases, the execution of the engine rotation synchronization control is suppressed. Preferably, the execution of the engine rotation synchronization control is prohibited.

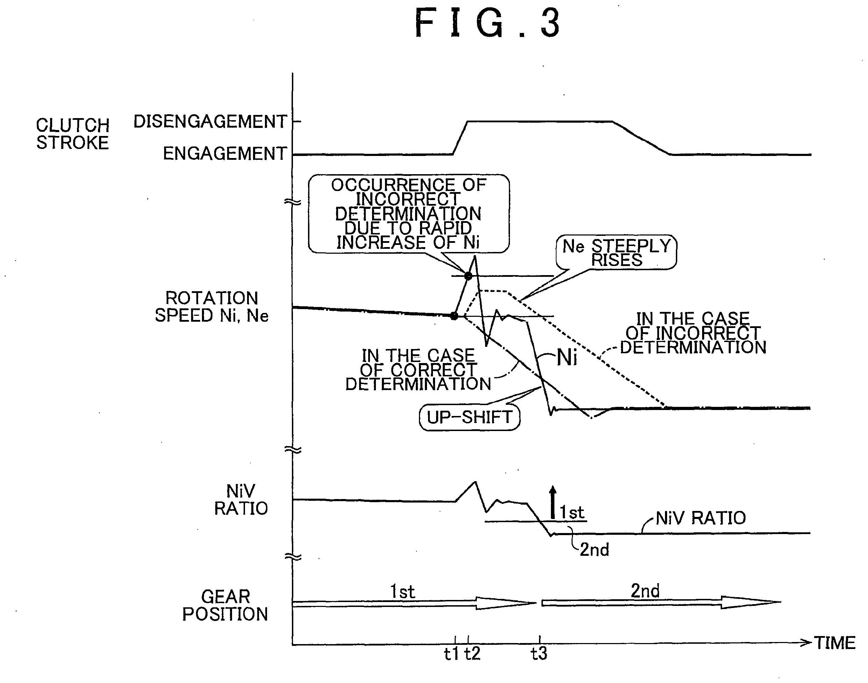

FIG.3 is a timing chart showing an example of the engine rotation synchronization control performed by the control unit 30 at shifting of the manual transmission 14. In FIG.3, variation of each relationship value upon up-shift from the first gear to the second gear of the manual transmission 14 is shown in time series, with the change in the input rotation speed Ni of the manual transmission 14, the change in the rotation speed Ne of the engine 12 in the case where a correct determination is performed by the control according to the present embodiment, and the change in the rotation speed Ne of the engine 12 in the case where an incorrect determination is performed by the control of related art being shown by a solid line, a one-dot chain line and a dashed line, respectively.

In the control shown in FIG.3, first, at time t1, the driver performs a depression operation to the clutch pedal 22 to start the disengagement of the clutch 16 (switch from engagement to disengagement). In parallel to this, the driver switches the shifting operation position of the shift lever 24 from the position corresponding to the first gear to the position corresponding to the second gear. Here, in the timing chart of FIG.3, the torsion of the drive system is released by the disengagement of the clutch 16, and the input rotation speed Ni of the manual transmission 14 is rapidly changed in the increase direction. In the control of related art, according to the rapid increase in the input rotation speed Ni, at time t2, the down-shift of the manual transmission 14 is incorrectly determined and the engine rotation synchronization control corresponding to the down-shift is performed. That is, a control which increases the rotation speed Ne of the engine 12 is performed, and the engine rotation speed Ne steeply rises, as indicated by the dashed line in FIG.3. At time t3, switching from the first gear to the second gear in the manual transmission 14 is performed. Since the engine rotation speed Ne is changed in the direction opposite to the shift direction intended by the driver due to the engine rotation synchronization control performed according to the incorrect determination of the down-shift, there is a possibility that the driver feels incongruity.

On the other hand, in the control of the present embodiment, in response to the NiV ratio corresponding to the first gear which is the lowest gear in the manual transmission 14, the down-shift determination value Ndn determined for determining the down-shift is set to a value that is great enough to suppress the determination of the down-shift. Therefore, as shown in FIG.3, even when the torsion of the drive system is released by the disengagement of the clutch 16 and the input rotation speed Ni of the manual transmission 14 is rapidly changed in the increase direction, the down-shift of the manual transmission 14 is not determined, and in turn the engine rotation synchronization control corresponding to the down-shift is also not performed. As result, the up-shift of the manual transmission 14, i.e., switching from the first gear to the second gear is determined correctly according to the change in the input rotation speed Ni of the manual transmission 14, and the engine rotation synchronization control corresponding to the up-shift is performed. That is, the engine rotation speed Ne is changed in the direction as intended by the driver, and prior to engagement of the clutch 16, the rotation speed Ne of the engine 12 is gradually approaching (synchronizing with) the input rotation speed Ni of the manual transmission 14, whereby to suitably suppress (alleviate) the occurrence of shock at the time of engaging the clutch 16.

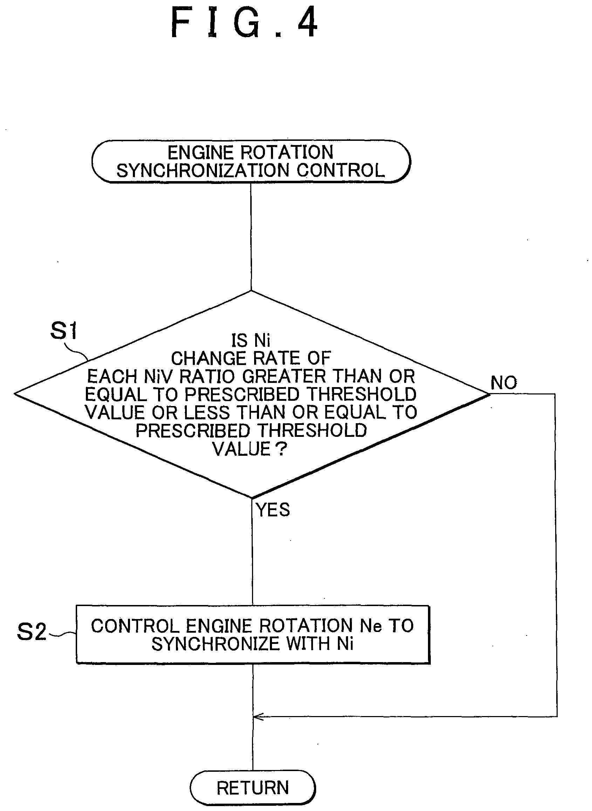

FIG.4 is a flow chart illustrating a principal part of an example of the engine rotation synchronization control by the control unit 30, which is repeatedly performed in a prescribed cycle.

First, in step (hereinafter, the "step" is omitted) S1, the change rate of the ratio NiV which is the ratio of the input rotation speed Ni of the manual transmission 14 to the vehicle speed V is determined to be greater than or equal to the down-shift determination value Ndn or less than or equal to the up-shift determination value Nup, both of which are predetermined for each of ratios NiV corresponding to respective gear positions of the manual transmission 14. Here, the down-shift determination value Ndn, which is determined in response to the NiV ratio corresponding to the lowest gear in the manual transmission 14, is set to a value which is great enough to suppress the determination of the down-shift, and the up-shift determination value Nup, which is determined in response to the NiV ratio corresponding to the highest gear in the manual transmission 14, is set to a value which is small enough to suppress the determination of the up-shift. If the determination in S1 is negative, the routine is ended accordingly, whereas if the determination in S1 is positive, the down-shift or the up-shift of the manual transmission 14 is determined in S2, and the engine rotation synchronization control for synchronizing the rotation speed Ne of the engine 12 with the input rotation speed Ni of the manual transmission 14 is performed, and then the routine is ended. In the above control, S1 corresponds to the operation of the down-shift/up-shift determination unit 50, and S2 corresponds to the operation of the engine rotation synchronization control unit 52.

In this way, according to the present embodiment, since in the case where the input rotation speed Ni of the manual transmission 14 increases when the manual transmission 14 is shifted from the lowest gear or the input rotation speed Ni of the manual transmission 14 decreases when the manual transmission 14 is shifted from the highest gear, the engine rotation synchronization control unit 52 suppresses the execution of the engine rotation synchronization control, the execution of the engine rotation synchronization control for changing the engine rotation speed Ne in the direction opposite to the shift direction intended by the driver can be suitably suppressed. That is, it can be provided a control unit 30 of a vehicle 10 for suppressing incongruity that a driver feels at shifting.

Although a preferred embodiment of the present invention has been described in detail above with reference to the accompanying drawings, the present invention is not limited thereto, and may be embodied with various alterations within a scope not departing from the subject matter of the present invention, as defined in the appended claims.

## Claims

1. A control system for a vehicle, the control system comprising:
an engine (12);
a manual transmission (14);
a clutch (16) that is provided in a power transmission path between the engine (12) and the manual transmission (14); and
an electronic control unit (30) configured to determine that a down-shift is executed when the manual transmission (14) is shifted and when an input rotation speed of the manual transmission (14) is changed to an increase side, the electronic control unit (30) being configured to determine that an up-shift is executed when the manual transmission (14) is shifted and when the input rotation speed of the manual transmission (14) is changed to a decrease side, the electronic control unit (30) being configured to execute a rotation synchronization control of the engine (12) when the electronic control unit (30) determines that the down-shift or the up-shift is executed, and **characterised in that** the electronic control unit (30) is configured to suppress an execution of the rotation synchronization control when the manual transmission (14) is shifted from a lowest gear and the input rotation speed of the manual transmission (14) increases or when the manual transmission (14) is shifted from a highest gear and the input rotation speed of the manual transmission (14) decreases.

2. The control system according to claim 1, wherein
the electronic control unit (30) is configured to determine that the down-shift is executed when a change rate of a ratio cf the input rotation speed of the manual transmission (14) to a vehicle speed in the lowest gear is greater than or equal to a first prescribed threshold value, and
the electronic control unit (30) is configured to determine that the down-shift is executed when a change rate of the ratio of the input rotation speed of the manual transmission (14) to the vehicle speed in a gear position other than the lowest gear is greater than or equal to a second prescribed threshold value, and
the first prescribed threshold value is higher than the second prescribed threshold value.

3. The control system according to claim 1 or 2, wherein
the electronic control unit (30) is configured to prohibit the rotation synchronization control that increases the rotation speed of the engine (12) when the clutch is disengaged with the lowest gear.

4. The control system according to any one of claims 1 to 3, wherein
the electronic control unit (30) is configured to determine that the up-shift is executed when a change rate of a ratio of the input rotation speed of the manual transmission (14) to a vehicle speed in the highest gear is less than or equal to a third prescribed threshold value,
the electronic control unit (30) is configured to determine that the up-shift is executed when a change rate of the ratio of the input rotation speed of the manual transmission (14) to the vehicle speed in a gear position other than the highest gear is less than or equal to a forth prescribed threshold value, and
the third prescribed threshold value is less than the forth prescribed threshold value.

5. The control system according to any one of claims 1 to 4, wherein
the electronic control unit (30) is configured to prohibit the rotation synchronization control that decreases the rotation speed of the engine (12) when the clutch is disengaged with the highest gear.

## Patentansprüche

1. Steuerungssystem für ein Fahrzeug, wobei das Steuerungssystem aufweist:
einen Motor (12),
ein manuelles Getriebe (14),
eine Kupplung (16), die in einem Energieübertragungspfad zwischen dem Motor (12) und dem manuellen Getriebe (14) vorgesehen ist, und
eine elektronische Steuerungseinheit (30), die konfiguriert ist, um zu bestimmen, dass ein Runterschalten ausgeführt wird, wenn das manuelle Getriebe (14) geschaltet wird und wenn eine Eingaberotationsgeschwindigkeit des manuellen Getriebes (14) auf eine Erhöhungsseite verändert wird, wobei die elektronische Steuerungseinheit (30) konfiguriert ist, um zu bestimmen, dass ein Hochschalten ausgeführt wird, wenn das manuelle Getriebe (14) geschaltet wird und wenn die Eingaberotationsgeschwindigkeit des manuellen Getriebes (14) auf eine Verringerungsseite verändert wird, wobei die elektronische Steuerungseinheit (30) konfiguriert ist, um eine Rotationsynchronisationssteuerung des Motors (12) auszuführen, wenn die elektronische Steuerungseinheit (30) bestimmt, dass das Runterschalten oder das Hochschalten ausgeführt wird, und **dadurch gekennzeichnet ist, dass**
die elektronische Steuerungseinheit (30) konfiguriert ist, um eine Ausführung der Rotationssynchronisationssteuerung zu unterdrücken, wenn das manuelle Getriebe (14) von einem niedrigsten Gang geschaltet wird und die Eingaberotationsgeschwindigkeit des manuellen Getriebes (14) sich erhöht oder wenn das manuelle Getriebe (14) von einem höchsten Gang geschaltet wird und die Eingaberotationsgeschwindigkeit des manuellen Getriebes (14) sich verringert.

2. Steuerungssystem nach Anspruch 1, wobei
die elektronische Steuerungseinheit (30) konfiguriert ist, um zu bestimmen, dass das Runterschalten ausgeführt wird, wenn eine Veränderungsrate eines Verhältnisses der Eingaberotationsgeschwindigkeit des manuellen Getriebes (14) zu einer Fahrzeuggeschwindigkeit in dem niedrigsten Gang größer als ein erster vorgeschriebener Schwellwert ist oder gleich diesem, und
die elektronische Steuerungseinheit (30) konfiguriert ist, um zu bestimmen, dass das Runterschalten ausgeführt wird, wenn eine Veränderungsrate des Verhältnisses der Eingaberotationsgeschwindigkeit des manuellen Getriebes (14) zu der Fahrzeuggeschwindigkeit in einer Gangposition, die anders als der niedrigste Gang ist, größer als ein zweiter vorgeschriebener Schwellwert ist oder gleich diesem, und
der erste vorgeschriebene Schwellwert höher als der zweite vorgeschriebene Schwellwert ist.

3. Steuerungssystem nach Anspruch 1 oder 2, wobei
die elektronische Steuerungseinheit (30) konfiguriert ist, um die Rotationssynchronisationssteuerung, die die Rotationsgeschwindigkeit des Motors (12) erhöht, zu unterbinden, wenn die Kupplung mit dem niedrigsten Gang nicht in Eingriff steht.

4. Steuerungssystem nach einem der Ansprüche 1 bis 3, wobei
die elektronische Steuerungseinheit (30) konfiguriert ist, um zu bestimmen, dass das Hochschalten ausgeführt wird, wenn eine Veränderungsrate eines Verhältnisses der Eingaberotationsgeschwindigkeit des manuellen Getriebes (14) zu einer Fahrzeuggeschwindigkeit im höchsten Gang kleiner als ein dritter vorgeschriebener Schwellwert ist oder gleich diesem,
die elektronische Steuerungseinheit (30) konfiguriert ist, um zu bestimmen, dass das Hochschalten ausgeführt wird, wenn eine Veränderungsrate des Verhältnisses der Eingaberotationsgeschwindigkeit des manuellen Getriebes (14) zu einer Fahrzeuggeschwindigkeit in einer Gangposition, die anders als der höchste Gang ist, kleiner als ein vorgeschriebener vierter Schwellwert ist oder gleich diesem, und
der dritte vorgeschriebene Schwellwert geringer als der vierte vorgeschriebene Schwellwert ist.

5. Steuerungssystem nach einem der Ansprüche 1 bis 4, wobei
die elektronische Steuerungseinheit (30) konfiguriert ist, um die Rotationssynchronisationssteuerung, die die Rotationsgeschwindigkeit des Motors (12) verringert, zu unterbinden, wenn die Kupplung mit dem höchsten Gang nicht in Eingriff steht.

## Revendications

1. Système de commande destiné à un véhicule, le système de commande comprenant :
un moteur (12) ;
une boîte de vitesses manuelle (14) ;
un embrayage (16) qui est placé dans une voie de transmission de puissance entre le moteur (12) et la boîte de vitesses manuelle (14) ; et
une unité de commande électronique (30) conçue pour déterminer qu'un rétrogradage est exécuté lorsqu'un changement de vitesse de la boîte de vitesses manuelle (14) est effectué et qu'une vitesse de rotation d'entrée de la boîte de vitesses manuelle (14) est modifiée du côté d'une augmentation, l'unité de commande électronique (30) étant conçue pour déterminer qu'un passage à une vitesse supérieure est exécuté lorsqu'un changement de vitesse de la boîte de vitesses manuelle (14) est effectué et que la vitesse de rotation d'entrée de la boîte de vitesses manuelle (14) est modifiée du côté d'une diminution, l'unité de commande électronique (30) étant conçue pour exécuter une commande de synchronisation de rotation du moteur (12) lorsque l'unité de commande électronique (30) détermine que le rétrogradage ou le passage à une vitesse supérieure est exécuté, et **caractérisé en ce que** :
l'unité de commande électronique (30) est conçue pour supprimer une exécution de la commande de synchronisation de rotation, lorsqu'un changement de vitesse de la boîte de vitesses manuelle (14) est effectué à partir du rapport de vitesse le plus bas et que la vitesse de rotation d'entrée de la boîte de vitesses manuelle (14) augmente ou lorsqu'un changement de vitesse de la boîte de vitesses manuelle (14) est effectué à partir du rapport de vitesse le plus élevé et que la vitesse de rotation d'entrée de la boîte de vitesses manuelle (14) diminue.

2. Système de commande selon la revendication 1, dans lequel :
l'unité de commande électronique (30) est conçue pour déterminer que le rétrogradage est exécuté lorsqu'une vitesse de variation d'un rapport de la vitesse de rotation d'entrée de la boîte de vitesses manuelle (14) à une vitesse de véhicule dans le rapport de vitesse le plus bas est supérieure ou égale à une première valeur de seuil prescrite, et
l'unité de commande électronique (30) est conçue pour déterminer que le rétrogradage est exécuté lorsqu'une vitesse de variation du rapport de la vitesse de rotation d'entrée de la boîte de vitesses manuelle (14) à la vitesse de véhicule dans une position de rapport de vitesse autre que le rapport de vitesse le plus bas est supérieure ou égale à une deuxième valeur de seuil prescrite, et
la première valeur de seuil prescrite est plus élevée que la deuxième valeur de seuil prescrite.

3. Système de commande selon la revendication 1 ou 2, dans lequel :
l'unité de commande électronique (30) est conçue pour interdire la commande de synchronisation de rotation qui augmente la vitesse de rotation du moteur (12) lorsque l'embrayage est débrayé au rapport de vitesse le plus bas.

4. Système de commande selon l'une quelconque des revendications 1 à 3, dans lequel :
l'unité de commande électronique (30) est conçue pour déterminer que le passage à une vitesse supérieure est exécuté lorsqu'une vitesse de variation d'un rapport de la vitesse de rotation d'entrée de la boîte de vitesses manuelle (14) à une vitesse de véhicule dans le rapport de vitesse le plus élevé est inférieure ou égale à une troisième valeur de seuil prescrite,
l'unité de commande électronique (30) est conçue pour déterminer que le passage à une vitesse supérieure est exécuté lorsqu'une vitesse de variation du rapport de la vitesse de rotation d'entrée de la boîte de vitesses manuelle (14) à la vitesse de véhicule dans une position de rapport de vitesse autre que le rapport de vitesse le plus élevé est inférieure ou égale à une quatrième valeur de seuil prescrite, et
la troisième valeur de seuil prescrite est plus basse que la quatrième valeur de seuil prescrite.

5. Système de commande selon l'une quelconque des revendications 1 à 4, dans lequel :
l'unité de commande électronique (30) est conçue pour interdire la commande de synchronisation de rotation qui diminue la vitesse de rotation du moteur (12) lorsque l'embrayage est débrayé au rapport de vitesse le plus élevé.
